# EUROPÄISCHE PATENTSCHRIFT

(11) **EP 3 625 454 B1**
(45) Veröffentlichungstag und Bekanntmachung des Hinweises auf die Patenterteilung: **24.02.2021**
(21) Anmeldenummer: 18726128.4
(22) Anmeldetag: 18.05.2018
(51) Int. Cl.: F03D 80/40, F03D 1/06

(54) **WINDENERGIEANLAGEN-ROTORBLATT**
WIND TURBINE ROTOR BLADE
PALE DE ROTOR D'ÉOLIENNE

(30) Priorität: 18.05.2017 DE 102017110797
(43) Veröffentlichungstag der Anmeldung: 25.03.2020
(73) Patentinhaber: Wobben Properties GmbH, 26607 Aurich (DE)
(72) Erfinder: GODENAU, Diethelm, 26607 Aurich (DE); KREBS, Sven, 26789 Leer (DE)
(74) Vertreter: Eisenführ Speiser
(86) Internationale Anmeldenummer: PCT/EP2018/063033
(87) Internationale Veröffentlichungsnummer: WO 2018/211055

(56) Entgegenhaltungen:
- WO-A1-2017/021350
- DE-A1-102010 051 293
- DE-A1-102013 206 493
- US-A1- 2015 056 074

## Beschreibung

Die vorliegende Erfindung betrifft ein Windenergieanlagen-Rotorblatt sowie eine Windenergieanlage mit einem entsprechenden Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes vorgesehen sein.

US 2015/056074 A1 zeigt ein Windenergieanlagen-Rotorblatt mit einer Rotorblattwurzel, einer Rotorblattspitze, einer Druckseite, einer Saugseite, einer Vorderkante und einer Hinterkante sowie einem Steg zwischen der Druck- und der Saugseite.

DE 10 2013 206 493 A1 zeigt ein Windenergieanlagen-Rotorblatt mit einer Rotorblattwurzel, einer Rotorblattspitze, einer Druckseite, einer Saugseite, einer Vorderkante, einer Hinterkante sowie einem Steg zwischen der Saugseite und der Druckseite.

WO 2017/021350 A1 zeigt ein Windenergieanlagen-Rotorblatt mit einem Rotorblattwurzelbereich und einem Rotorblattspitzenbereich. Ferner ist mindestens ein Steg entlang einer Längsrichtung des Rotorblattes vorgesehen. An dem Steg kann eine Umlenkeinheit in Form eines Stegtropfens vorgesehen sein, um eine Verwirbelung der Luft beim Umlenken zu reduzieren.

Windenergieanlagen-Rotorblätter zum Stand der Technik sind auch in den Dokumenten CA 2988834 , CN 101029624 , JP 2014218944,CN 106224181, DE 102010051297 und DE102015013369 offenbart. Es ist eine Aufgabe der vorliegenden Erfindung, ein Windenergieanlagen-Rotorblatt vorzusehen, welches eine verbesserte Beheizung des Rotorblattes ermöglicht.

Diese Aufgabe wird durch ein Windenergieanlagen-Rotorblatt nach Anspruch 1 gelöst.

Somit wird ein Windenergieanlagen-Rotorblatt mit einem Rotorblattwurzelbereich, einem Rotorblattspitzenbereich, einer Druckseite, einer Saugseite, einer Vorderkante, einer Hinterkante und mit mindestens einem Steg zwischen der Druckseite und der Saugseite und entlang einer Längsrichtung des Rotorblattes vorgesehen. Ferner ist eine Umlenkeinheit zwischen einem Ende des mindestens einen Steges und dem Rotorblattspitzenbereich vorgesehen. Mindestens eine Hutze ist an dem Steg vorgesehen, wobei die Hutze in einem Bereich zwischen einem ersten und zweiten Steg hineinragt.

Die Grenzschichtabsaugeinheit weist eine Mehrzahl von Aussparungen auf.

Gemäß einem Aspekt der vorliegenden Erfindung weist das Rotorblatt eine Grenzschichtabsaugeinheit auf, welches sich an den rotorblattspitzenseitigen Enden des ersten und zweiten Steges anschließt. Die Grenzschichtabsaugeinheit dient zum Absaugen einer (turbulenten) Grenzschicht einer Luftströmung.

Gemäß einem weiteren Aspekt der vorliegenden Erfindung schließt sich ein erstes Ende der Grenzschichtabsaugeinheit an einem ersten Steg an und ein zweites Ende der Grenzschichtabsaugeinheit schließt sich an einem Ende des zweiten Steges an.

Gemäß einem Aspekt der vorliegenden Erfindung weist der Rotorblattspitzenbereich eine zumindest teilweise hohle Rotorblattspitze auf. Die Umlenkeinheit verschließt den Rotorblattspitzenbereich im Wesentlichen, wobei ein erster Lüftungskanal zwischen einem Ende der Umlenkeinheit und einer Nasenkappe vorgesehen ist, und ein zweiter Luftkanal zwischen einem Ende der Umlenkeinheit und einer Hinterkante vorgesehen ist.

Ferner betrifft die Erfindung eine Windenergieanlage mit mindestens einem oben beschriebenen Windenergienanlagen-Rotorblatt.

Gemäß einem Aspekt der vorliegenden Erfindung kann warme bzw. erwärmte Luft zur Beheizung des Rotorblattes in den Rotorblattwurzelbereich eingeführt bzw. eingeströmt werden. Gemäß einem Aspekt der vorliegenden Erfindung wird die erwärmte Luft vorzugsweise in dem Bereich zwischen der Vorderkante und einem Steg eingeführt und strömt entlang der Vorderkante und des Steges vom Rotorblattwurzelbereich zum Rotorblattspitzenbereich. Dabei kann ein Teil dieser Luftströmung durch die Hutze, welche in dem Steg vorgesehen ist, zumindest teilweise abgeführt werden bzw. ein Teil der Luftströmung wird durch die Hutze in einen Bereich zwischen den beiden Stegen umgelenkt und strömt in Richtung des Rotorblattwurzelbereichs. Alternativ dazu kann die erwärmte Luft in den Bereich zwischen der Hinterkante und dem anderen Steg von dem Wurzelblattwurzelbereich zum Rotorblattspitzenbereich strömen.

Somit wird ein Windenergieanlagen-Rotorblatt mit einem Rotorblattwurzelbereich, einem Rotorblattspitzenbereich, einer Druckseite, einer Saugseite, mindestens einem Steg, welcher sich entlang einer Längsrichtung des Rotorblattes erstreckt. Bei herkömmlichen Rotorblättern ist die Rotorblattspitze typischerweise zwar hohl ausgestaltet, aber mit einem Füllmaterial ausgeschäumt. Damit wird eine effektive Beheizung einer Rotorblattspitze behindert. Dies kann zu einem Eisansatz insbesondere im Bereich der Rotorblattspitze und kann aufgrund der hohen Geschwindigkeit der Rotorblattspitze zu einem gefährlichen Eisabwurf führen. Ferner wird eine beheizbare Blattspitze mit einer angepassten Umlenkung in dem Rotorblattspitzenbereich vorgesehen. Ferner kann optional ein Stegschott vorgesehen werden. Zur weiteren Verbesserung kann eine Bypass-Hutze vorgesehen werden, welche die Strömung im Umlenkbereich optimiert, in dem die Grenzschichtströmung am Stegende abgesaugt wird und somit Strömungsabrisse und Verwirbelungen vermindert werden können.

Gemäß einem Aspekt der vorliegenden Erfindung wird eine Umlenkeinheit beispielsweise in Form eines Schaumkeiles im Bereich der Rotorblattspitze vorgesehen. Diese Umlenkeinheit dient dazu eine Luftströmung an der Vorderkante umzulenken, damit auch die Hinterkante mit erwärmter Luft beheizt werden kann. Der Schaumkeil kann so vorgesehen werden, dass ein Teil der Luftströmung an ihm vorbei in eine Rotorblattspitze hineinströmen und wieder herausströmen kann, um die Rotorblattspitze zu erwärmen. Mit dem erfindungsgemäßen Rotorblatt ist es möglich, dass die Hauptströmung durch eine integrierte Umlenkung in Richtung des Blattflansches geführt wird während eine Nebenströmung im Nasenkappenbereich entlang der Umlenkung zu der Rotorblattspitze geleitet wird.

Gemäß einem Aspekt der vorliegenden Erfindung können Bohrungen in der Rotorblattspitze vorgesehen sein, um eine Entwässerung der Rotorblattspitze gewährleisten zu können. Optional kann ein Gitter vor einem Lufteintritt der Rotorblattspitze vorgesehen sein, um ein Verstopfen der Entwässerung verhindern zu können.

Gemäß einem Aspekt der vorliegenden Erfindung kann eine Hutze im Bereich eines der Stege vorgesehen sein, um einen Bypass zu ermöglichen. Dies kann zu einem Unterdruck im tipseitigen Torsionskanal führen.

Gemäß der Erfindung kann ein Volumenstrom der Blattheizung vergrößert werden. Mit dem erfindungsgemäßen Rotorblatt ist es möglich, eine Luftströmung bei jeder Strömungsgeschwindigkeit optimal umzulenken und einen Druckverlust zu reduzieren. Mit dem erfindungsgemäßen Rotorblatt kann ein Strömungsabriss sowie Verwirbelungen im Umlenkbereich reduziert werden. Das Rotorblatt bzw. die Rotorblattspitze kann enteist werden, um einen Eisabwurf zu reduzieren.

Mit dem erfindungsgemäßen Rotorblatt wird die Luftströmung einer Rotorblattbeheizung auf einfache und unkomplizierte Art und Weise verbessert, ohne dass dabei der Blitzschutz negativ beeinträchtigt wird. Durch die Hutze wird ein Unterdruck im Bereich zwischen dem ersten und zweiten Steg erzeugt. Damit dient die Hutze der Strömungsunterstützung.

Zusätzlich oder alternativ dazu kann ein Umlenkelement vorgesehen werden, welches eine möglichst geringe Querschnittsflächenänderung aufweist, wobei der Strömungskanal nach dem Einbau der Umlenkeinheit eine geringe Querschnittsflächenänderung aufweist.

Gemäß der Erfindung wird ein Windenergieanlagen-Rotorblatt vorgesehen, welches mindestens ein, vorzugsweise zwei, Stege entlang der Längsrichtung des Rotorblattes aufweist. Zur Beheizung des Rotorblattes kann eine Luftströmung entlang der Stege vorgesehen sein. Die Luftströmung startet im Rotorblattwurzelbereich und die, vorzugsweise erwärmte, Luft strömt entlang des ersten und/oder zweiten Steges und muss im Rotorblattspitzenbereich umgelenkt werden. Zur Verbesserung der Luftströmung wird mindestens eine Hutze in einem der Stege vorgesehen, wobei ein Loch in dem Steg an der Stelle der Hutze vorgesehen ist, so dass mittels der Hutze ein Unterdruck vorzugsweise in einem Bereich zwischen dem ersten und zweiten Steg vorgesehen werden kann. Zur weiteren Verbesserung der Luftströmung kann optional eine Grenzabsaugeinheit beispielsweise in Form eines Grenzabsaugbleches an den freien Enden des ersten und zweiten Steges vorgesehen sein. Zwischen der Grenzschichtabsaugeinheit und der Hutze ist ein Synergieeffekt vorhanden, da die Hutze in dem Steg einen Unterdruck in dem Bereich zwischen dem ersten und zweiten Steg erzeugen kann, wodurch die Grenzschichtabsaugung mittels der Grenzschichtabsaugeinheit verbessert wird.

Optional kann eine hohle Rotorblattspitze vorgesehen sein, vor der eine Umlenkeinheit vorgesehen ist, welche einen ersten und zweiten Luftkanal zwischen der Umlenkeinheit und den Schalen des Rotorblattes frei lässt, so dass die hohle Rotorblattspitze beheizt bzw. mit warmer Luft durchströmt werden kann.

Gemäß einem Aspekt der vorliegenden Erfindung ist mindestens eine Hutze an einem ersten Steg und zwischen dem ersten und zweiten Steg vorgesehen. In dem Bereich der Hutze muss ein Loch in dem Steg vorhanden sein, damit Luft durch dieses Loch und die Hutze in den Bereich zwischen dem ersten und zweiten Steg strömen kann. Die Hutze hat zum einen die Funktion, eine Luftströmung in einem Bereich zwischen dem ersten Steg und einer Vorderkante des Rotorblattes in einem Bereich zwischen dem ersten und zweiten Steg umzulenken, wobei die Strömung dann in Richtung der Rotorblattwurzel weiterströmt. Die Hutze hat ferner die Funktion zusammen mit der Grenzschichtabsaugeinheit eine, insbesondere turbulente Grenzschicht im Bereich der Grenzschichtabsaugeinheit abzusaugen. Zusammen mit der Grenzschichtabsaugeinheit wirkt die Hutze wie eine Strahlpumpe und führt dazu, dass ein Unterdruck in dem Bereich zwischen dem ersten und zweiten Steg entsteht.

Gemäß einem alternativen Aspekt der vorliegenden Erfindung kann die Hutze auch an dem zweiten Steg angeordnet sein, wenn die Luft in dem Bereich zwischen dem zweiten Steg und der Endkante aus dem Rotorblattwurzelbereich zu dem Rotorblattspitzenbereich strömt.

Alternativ dazu kann die Hutze sowohl in dem ersten als auch in dem zweiten Steg vorgesehen sein, wenn die Luftströmung sowohl entlang der Vorderkante als auch entlang der Hinterkante von dem Rotorblattwurzelbereich zu dem Rotorblattspitzenbereich geführt wird.

Gemäß einem Aspekt der vorliegenden Erfindung weisen die Schlitze 281 in dem Grenzschichtabsaugblech eine Breite von <=5mm auf.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische und abschnittsweise Darstellung eines Rotor-blattes der Windenergieanlage von Fig. 1,
- Fig. 3: zeigt eine schematische Darstellung eines Rotorblattspitzenbereiches des Rotorblattes gemäß der Erfindung,
- Fig. 4: zeigt eine schematische Darstellung eines Abschnitts des Rotorblattes gemäß der Erfindung,
- Fig. 5: zeigt eine schematische Veranschaulichung eines weiteren Abschnitts des Rotorblattes gemäß der Erfindung und
- Fig. 6: zeigt eine schematische Darstellung des rotorblattspitzenseitigen Bereichs des Rotorblattes gemäß der Erfindung.

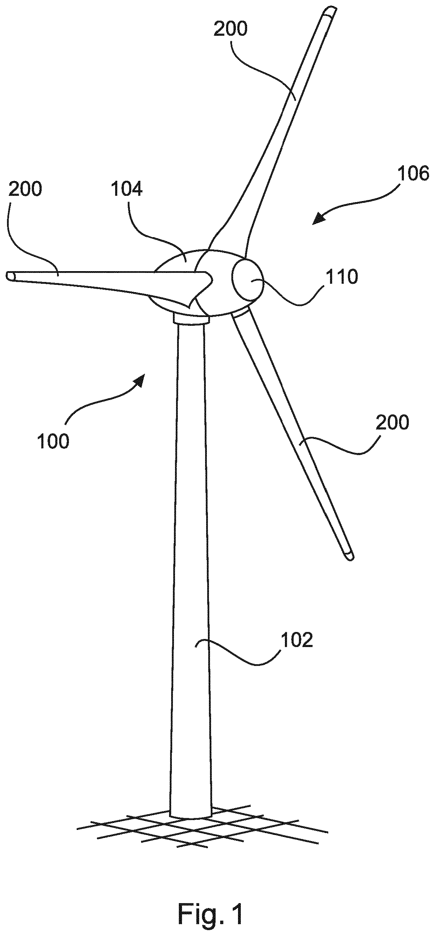

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

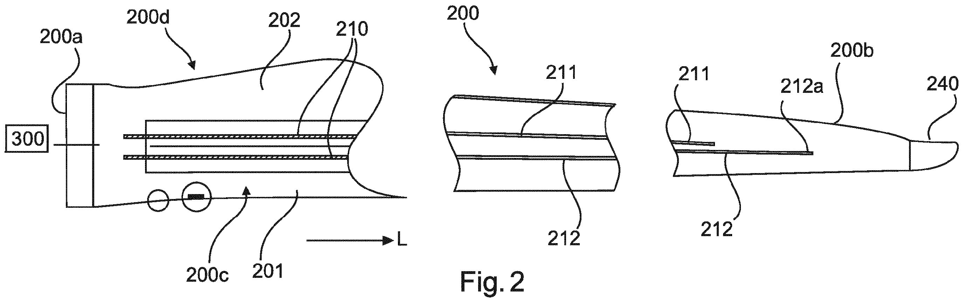

Fig. 2 zeigt eine schematische und abschnittsweise Darstellung eines Rotorblattes der Windenergieanlage von Fig. 1. Das Rotorblatt 200 weist einen Rotorblattwurzelbereich 200a, einen Rotorblattspitzenbereich 200b, eine Rotorblattspitze 240, eine Vorderkante 201, eine Hinterkante 202, eine Druckseite 200c und eine Saugseite 200d auf. Entlang einer Längsrichtung L des Rotorblattes 200 erstreckt sich innerhalb des Rotorblattes mindestens ein Steg 210. Beispielsweise können zwei Stege 211, 212 vorgesehen sein, welche zunächst parallel und im Bereich der Rotorblattspitze 240 aufeinander zulaufend ausgestaltet sein können. Hierbei kann die Länge des ersten Steges 211 geringer sein als die Länge des zweiten Steges 212. Die Rotorblattspitze 240 kann als ein separates Teil ausgestaltet sein und an dem Rest des Rotorblattes 200 befestigt werden.

Erwärmte Luft kann entlang der Stege in Richtung der Rotorblattspitze 240 geführt und dann umgelenkt werden. Optional kann die Rotorblattspitze zumindest teilweise hohl ausgestaltet sein, so dass ein Teil der erwärmten Luft durch die Rotorblattspitze 240 strömen kann, um die Rotorblattspitze 240 zu enteisen.

Gemäß einem Aspekt der vorliegenden Erfindung kann die erwärmte Luft entweder im Rotorblattwurzelbereich erzeugt werden, in dem Luft mittels einer Heizeinheit 300 erwärmt wird oder die erwärmte Luft wird dem Rotorblatt in dem Rotorblattwurzelbereich zugeführt.

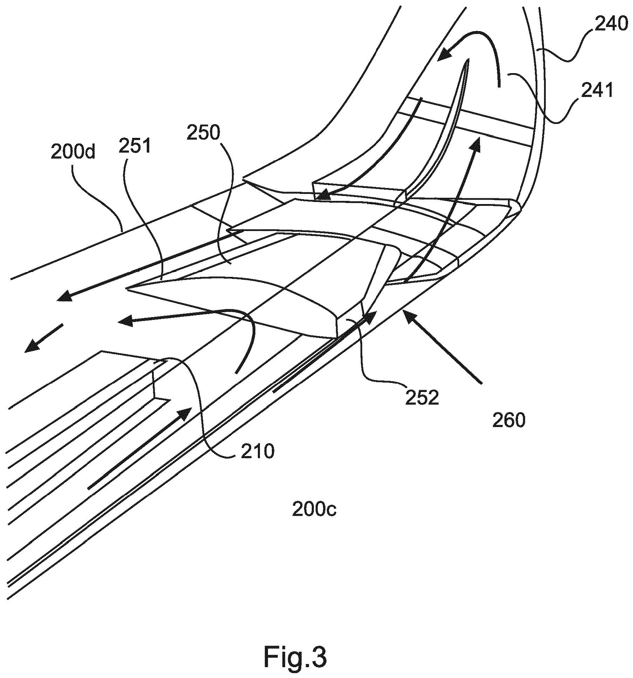

Fig. 3 zeigt eine schematische Darstellung eines Rotorblattspitzenbereiches des Rotorblattes gemäß der Erfindung. Von dem Rotorblattwurzelbereich 200a strömt eine Luftströmung (z.B. die von der Heizeinheit 300 erwärmte Luft) entlang der Vorderkante 200c zum Rotorblattspitzenbereich 200b und trifft dort auf eine Umlenkeinheit 250, welche beispielsweise als ein Schaumkeil ausgestaltet sein kann. Im Rotorblattspitzenbereich 200b kann eine Rotorblattnasenkappe 260 vorgesehen sein. Die Umlenkeinheit 250 weist ein erstes Ende 251 und ein zweites Ende 252 auf. Zwischen dem zweiten Ende 252 und der Rotorblattnasenkappe 260 kann ein Freiraum 253 vorhanden sein, so dass ein Teil der Luftströmung durch diesen Freiraum hindurch in die Rotorblattspitze 240 einströmen kann. Die Rotorblattspitze 240 kann zumindest teilweise einen Hohlraum 241 aufweisen, so dass die Luftströmung in den Hohlraum 241 hinein und wieder hinausströmen kann. Zwischen dem ersten Ende 251 der Umlenkeinheit und einer Hinterkante 200d ist ferner ein weiterer Durchgang 254 vorhanden, so dass die Luft hier durchströmen kann. Der Großteil der Luftströmung wird dann durch die Umlenkeinheit 250 umgelenkt, so dass die Luft dann zwischen dem ersten Steg 211 und der Hinterkante wieder zurück zur Rotorblattwurzel 200a strömen kann.

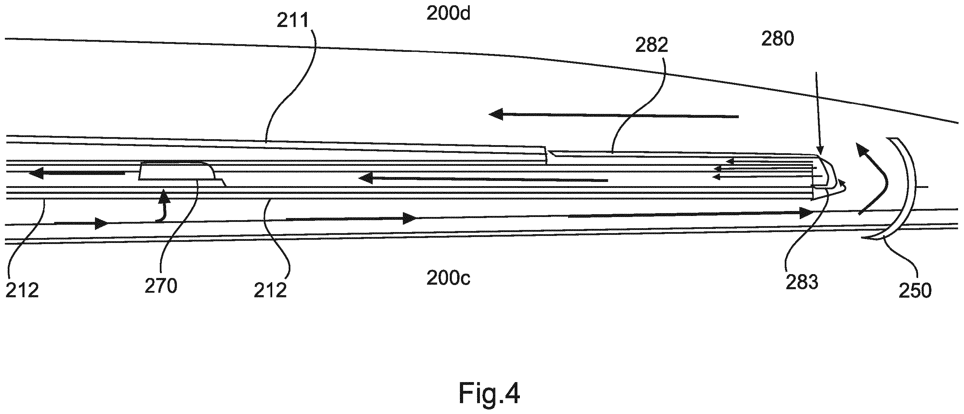

Fig. 4 zeigt eine schematische Darstellung eines Abschnitts des Rotorblattes gemäß der Erfindung. Zur weiteren Verbesserung der Luftströmung kann eine Hutze 270 in dem ersten Steg 212 vorgesehen sein. Die Hutze 270 reicht dann in den Bereich zwischen dem ersten und zweiten Steg 211, 212 hinein.

Gemäß einem Aspekt der vorliegenden Erfindung kann ein Rotorblatt mit einer Hutze an dem zweiten Steg 212 vorgesehen sein, ohne dass eine Umlenkeinheit 250 vorgesehen ist. Ferner muss das Rotorblatt keine hohle Blattspitze aufweisen.

Zur weiteren Verbesserung der Umlenkung der Luftströmung im Bereich der Rotorblattspitze kann eine Grenzschichtabsaugeinheit 280 vorgesehen sein, welche im Bereich der Enden des ersten und zweiten Steges vorgesehen sein kann.

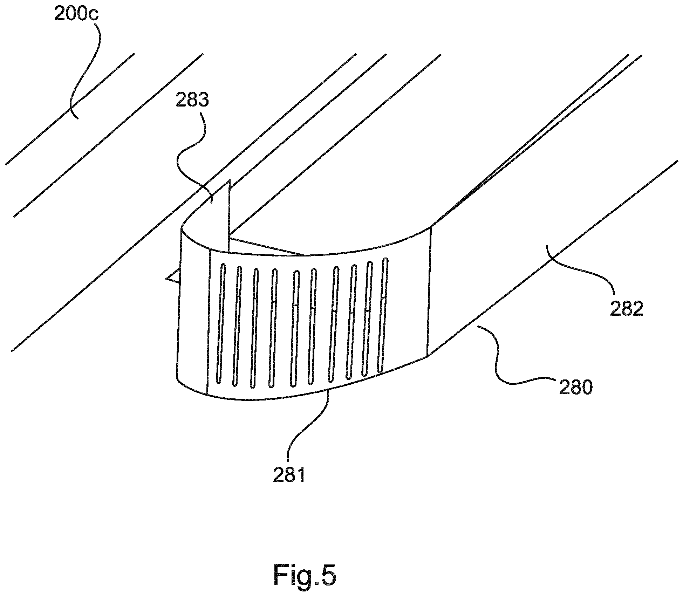

Fig. 5 zeigt eine schematische Veranschaulichung eines weiteren Abschnitts des Rotorblattes gemäß der Erfindung. Die Grenzschichtabsaugeinheit 280 kann als Grenzschichtabsaugblech ausgestaltet sein und kann ein erstes Ende 282 und ein zweites Ende 283 aufweisen. Das zweite Ende 283 ist mit einem Ende des ersten Steges 212 gekoppelt während das erste Ende 282 mit einem Ende des Steges 211 gekoppelt ist. Ferner sind eine Mehrzahl von länglichen Aussparrungen 281 vorgesehen.

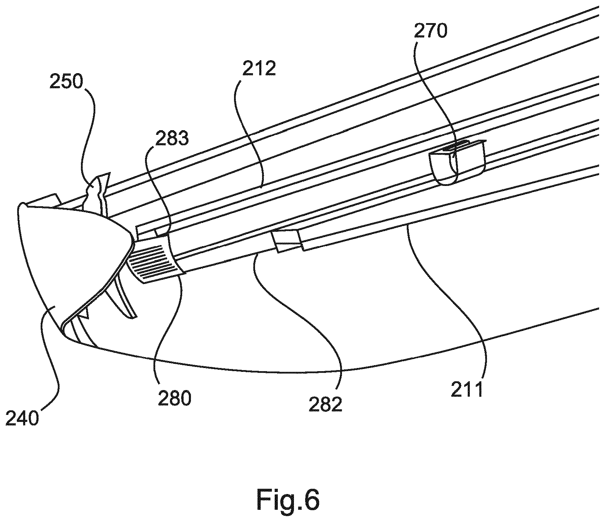

Fig. 6 zeigt eine schematische Darstellung des rotorblattspitzenseitigen Bereichs des Rotorblattes gemäß der Erfindung. In Fig. 6 ist insbesondere die Rotorblattspitze 240, ein Schaumkeil 250, die Hutze 270 sowie die Grenzschichtabsaugeinheit 280 z.B. in Form eines Grenzschichtabsaugblechs gezeigt.

Die Hutze 270 ist an oder im Bereich des Stegs 212 vorgesehen und dient als Bypass-Hutze. Durch diese Hutze 270 kann eine Strömung im Umlenkbereich optimiert werden, in dem die Grenzschichtströmung am Stegende abgesaugt wird und Strömungsabrisse und Verwirbelungen verringert werden. Zur weiteren Verbesserung der Strömung im Umlenkbereich ist eine Grenzschichtabsaugeinheit 280 vorgesehen, welche längliche Aussparungen im Umlenkbereich aufweist. Die Umlenkeinheit 250 kann als ein Schaumkeil implementiert sein und dient als Umlenkung für eine Luftströmung. Die Umlenkeinheit 250 wird im Bereich der Rotorblattspitze 240 vorgesehen. Die Umlenkeinheit 250 kann dabei als Stegverlängerung dienen und eine verbesserte Luftführung in die Blattspitze gewährleisten. Hierbei kann eine Hauptströmung, welche auf die Umlenkeinheit trifft, entsprechend umgelenkt werden, so dass sie beispielsweise zwischen dem ersten und zweiten Steg 211, 212 oder zwischen dem Steg 211 und der Hinterkante wieder zur Rotorblattwurzel zurückströmt. Eine Teilströmung strömt zwischen den beiden Stegen zurück zu der Rotorblattwurzel und ein Teil der Strömung strömt zwischen dem Steg 211 und der Hinterkante zurück zur Rotorblattwurzel.

## Patentansprüche

1. Windenergieanlagen-Rotorblatt (200), mit
einem Rotorblattwurzelbereich (200a),
einem Rotorblattspitzenbereich (200b),
einer Druckseite (200c),
einer Saugseite (200d),
einer Vorderkante (201),
einer Hinterkante (202)
mindestens einem Steg (210, 211, 212), welcher sich zwischen der Druckseite (200c) und der Saugseite (200d) und entlang einer Längsrichtung (L) des Rotorblattes (200) erstreckt,
einer Umlenkeinheit (250), welche zwischen einem Ende des mindestens einen Stegs (210, 211, 212) und dem Rotorblattspitzenbereich vorgesehen ist, und dazu ausgestaltet ist, erwärmte Luft, welche von dem Rotorblattwurzelbereich (200a) entlang des mindestens einen Stegs (210-212) strömt, umzulenken und
mindestens einer Hutze (270) an einem des mindestens einen Stegs (212), ferner mit einer Grenzschichtabsaugeinheit (280), welche an den rotorblattspitzenseitigen Enden eines ersten und zweiten Steges (211, 212) anschließt, zum Absaugen einer turbulenten Grenzschicht einer Luftströmung,
wobei die Grenzschichtabsaugeinheit (280) eine Mehrzahl von Aussparungen (281) aufweist.

2. Windenergieanlagen-Rotorblatt (200) nach Anspruch 1, wobei
die Hutze (270) in einem Bereich zwischen dem ersten und zweiten Steg (211, 212) hineinragt und dazu dient einen Unterdruck in einen Bereich zwischen dem ersten und zweiten Steg (211, 212) zu erzeugen.

3. Windenergieanlagen-Rotorblatt (200) nach Anspruch 1 oder 2, wobei
ein erstes Ende (282) der Grenzschichtabsaugeinheit (280) an einem ersten Steg (211) anschließt und ein zweites Ende (283) an einem Ende eines zweiten Steges (212) anschließt.

4. Windenergieanlagen-Rotorblatt nach einem der Ansprüche 1 bis 3, wobei der Rotorblattspitzenbereich (200b) eine zumindest teilweise hohle Rotorblattspitze (240) aufweist,
wobei die Umlenkeinheit (250) den Rotorblattspitzenbereich (200b) im Wesentlichen verschließt,
wobei ein erster Lüftungskanal zwischen einem Ende (252) der Umlenkeinheit (250) und einer Nasenkappe (260) vorgesehen ist und ein zweiter Luftkanal zwischen einem Ende (251) der Umlenkeinheit (250) und einer Hinterkante (202) vorgesehen ist.

5. Windenergieanlage, mit mindestens einem Windenergieanlagen-Rotorblatt nach einem der Ansprüche 1 bis 4.

## Claims

1. A wind turbine rotor blade (200), comprising
a rotor blade root region (200a),
a rotor blade tip region (200b),
a pressure side (200c),
a suction side (200d),
a leading edge (201),
a trailing edge (202)
at least one flange (210, 211, 212), which extends between the pressure side (200c) and the suction side (200d) and along a longitudinal direction (L) of the rotor blade (200),
a deflecting unit (250), which is provided between one end of the at least one flange (210, 211, 212) and the rotor blade tip region and is configured to deflect heated air which flows from the rotor blade root region (200a) along the at least one flange (210-212) and
at least one air scoop (270) on one of the at least one flange (212),
and further comprising a boundary-layer extraction unit (280), which adjoins the rotor-blade-tip-side ends of a first and second flange (211, 212) for extracting a turbulent boundary layer of an air flow,
wherein the boundary-layer extraction unit (280 comprises a plurality of recesses (281).

2. The wind turbine rotor blade (200) according to claim 1, wherein
the air scoop (270) protrudes in a region between the first and second flange (211, 212) and serves to produce a negative pressure in a region between the first and second flange (211, 212).

3. The wind turbine rotor blade (200) according to claim 1 or 2, wherein a first end (282) of the boundary-layer extraction unit (280) adjoins a first flange (211) and a second end (283) adjoins one end of a second flange (212).

4. The wind turbine rotor blade according to one of claims 1 to 3, wherein
the rotor blade tip region (200b) comprises an at least partially hollow rotor blade tip (240),
wherein the deflecting unit (250) substantially closes the rotor blade tip region (200b),
wherein a first ventilation channel is provided between one end (252) of the deflecting unit (250) and a nose cap (260) and a second air channel is provided between one end (251) of the deflecting unit (250) and a trailing edge (202).

5. A wind turbine having at least one wind turbine rotor blade according to one of claims 1 to 4.

## Revendications

1. Pale de rotor d'éolienne (200), avec
une zone de pied de pale de rotor (200a),
une zone de bout de pale de rotor (200b),
un intrados (200c),
un extrados (200d),
un bord d'attaque (201),
un bord de fuite (202),
au moins une traverse (210, 211, 212) qui s'étend entre l'intrados (200c) et l'extrados (200d) et le long d'un sens longitudinal (L) de la pale de rotor (200),
une unité de renvoi (250) qui est prévue entre une extrémité de l'au moins une traverse (210, 211, 212) et la zone de bout de pale de rotor, et est configurée afin de renvoyer de l'air chauffé qui passe de la zone de pied de pale de rotor (200a) le long de l'au moins une traverse (210-212), et
au moins une prise d'air (270) au niveau d'une de l'au moins une traverse (212), de plus avec une unité d'aspiration de couche limite (280) qui est contiguë aux extrémités côté bout de pale de rotor d'une première et d'une seconde traverse (211, 212) pour l'aspiration d'une couche limite turbulente d'un courant d'air,
dans laquelle l'unité d'aspiration de couche limite (280) présente une pluralité d'évidements (281).

2. Pale de rotor d'éolienne (200) selon la revendication 1, dans laquelle
la prise d'air (270) pénètre dans une zone entre la première et la seconde traverse (211, 212) et sert à générer une dépression dans une zone entre la première et la seconde traverse (211, 212).

3. Pale de rotor d'éolienne (200) selon la revendication 1 ou 2, dans laquelle
une première extrémité (282) de l'unité d'aspiration de couche limite (280) est contiguë à une première traverse (211) et une seconde extrémité (283) est contiguë à une extrémité d'une seconde traverse (212).

4. Pale de rotor d'éolienne selon l'une des revendications 1 à 3, dans laquelle
la zone de bout de pale de rotor (200b) présente un bout de pale de rotor (240) au moins partiellement creux,
dans laquelle l'unité de renvoi (250) ferme sensiblement la zone de bout de pale de rotor (200b),
dans laquelle un premier canal de ventilation est prévu entre une extrémité (252) de l'unité de renvoi (250) et un couvercle de nez (260) et un second canal de ventilation est prévu entre une extrémité (251) de l'unité de renvoi (250) et un bord de fuite (202).

5. Éolienne, avec au moins une pale de rotor d'éolienne selon l'une des revendications 1 à 4.
